# FASCICULE DE BREVET EUROPEEN

(11) **EP 3 475 489 B1**
(45) Date de publication et mention de la délivrance du brevet: **05.08.2020**
(21) Numéro de dépôt: 16753409.8
(22) Date de dépôt: 27.06.2016
(51) Int. Cl.: E02D 33/00

(54) **PROCÉDÉ DE DÉTECTION**
DETEKTIERVERFAHREN
METHOD OF DETECTION

(43) Date de publication de la demande: 01.05.2019
(73) Titulaire: Osmos Group, 75016 Paris (FR)
(72) Inventeur: HODAC, Bernard, 75001 Paris (FR)
(74) Mandataire: IPAZ
(86) Numéro de dépôt international: PCT/FR2016/051574
(87) Numéro de publication internationale: WO 2018/002452

(56) Documents cités:
- DE-T2- 69 820 456

## Description

La présente invention concerne un procédé de détection précoce des risques de défaillance d'une structure naturelle ou humaine, en particulier du fait de conditions géologiques régnant en-dessous de la structure.

Une structure humaine, tels que bâtiments ou ouvrages de génie civil, est en général intrinsèquement très fiable si elle n'a présenté aucune défaillance dans les quelques années qui suivent sa mise en service. Le plus gros risque est alors lié aux faiblesses ou altérations du sol supportant la structure. Il peut se produire des affaissements, des gonflements et autres déformations, mouvements de terrain et variations de résistance mécanique etc.

Ces évolutions des caractéristiques mécaniques en dessous de la structure sont de nature à fragiliser et endommager la structure, et la rendre dangereuse.

Un procédé selon la preambule de la revendication 1 es connu par le document WO 2011/012406 A1.

Une problématique semblable peut concerner certaines structures naturelles comme des structures rocheuses, par exemple une falaise dont la base est exposée à l'érosion.

Un but de la présente invention est de proposer un procédé simple, efficace et fiable pour détecter très précocement les situations qui mettent en danger au moins une structure en raison d'une évolution survenue en dessous de la structure.

Suivant l'invention, le procédé de détection précoce des risques de défaillance d'une structure naturelle ou humaine, en particulier du fait de conditions géologiques régnant en-dessous de la structure, est caractérisé en ce que l'on place sur la structure un détecteur d'élongation directement au-dessus de chacun de plusieurs points d'appui de la structure, et l'on diagnostique une évolution du sol sous-jacent à la structure au moins dans certains cas où les élongations détectées indiquent une évolution de la répartition des charges verticales entre lesdits plusieurs points appui.

Lorsque le sol sous-jacent à la structure est stable et robuste, les détecteurs d'élongation verticale donnent une indication stable qui est fonction de la charge que la structure applique au sol en chacun des plusieurs points d'appui, respectivement. Ladite charge est principalement constituée par la part du poids de la structure qui est appliquée au point d'appui respectif. Dans le cas général, la charge est différente en chacun des plusieurs points d'appui. Si maintenant les conditions dans lesquelles la structure s'appuie sur le sol se dégradent, la dégradation affecte en général différemment l'assise de la structure sous les différents points d'appui. La répartition de la charge sur les différents points d'appui se modifie. Les appuis reposant sur un sol plus porteur subissent une charge plus importante et les autres appuis sont déchargés de façon correspondante. Cela est détecté par les détecteurs d'élongation.

De préférence les détecteurs sont des détecteurs d'élongation verticale. La détection selon l'invention est alors particulièrement efficace et l'interprétation des résultats de détection est facilitée.

Typiquement, on diagnostique une tendance à un tassement ou un effondrement en dessous d'un point d'appui où l'élongation mesurée a augmenté, et/ou on diagnostique une tendance au gonflement en dessous d'un point d'appui où l'élongation mesurée a diminué.

Lorsque la structure est un bâtiment ou analogue, on place de préférence les détecteurs d'élongation verticale à la base de piliers porteurs, en particulier de piliers d'angle de la structure. Ceci a le double avantage de placer les détecteurs en des emplacements qui concentrent les efforts de chargement dû au poids de la structure, et d'augmenter la sensibilité aux variations de conditions géologiques en écartant le plus possible les détecteurs les uns des autres.

Dans d'autres types de structures, il est difficile d'identifier des piliers ou autres points d'appui localisés. C'est le cas par exemple d'une citerne cylindrique à axe vertical, par exemple du type utilisé dans l'industrie pétrolière ou pétrochimique. On répartit alors les détecteurs d'élongation, de préférence d'élongation verticale, tout autour de la base de la citerne ou autre structure comparable, avec par exemple un détecteur tous les 10-20 mètres.

Lorsque la structure comporte un radier formant semelle d'appui sur le sol, les détecteurs sont de préférence des détecteurs d'élongation horizontale que l'on place sur le radier pour détecter les variations de flexion et/ou de cisaillement du radier. Les structures équipées d'un radier sont en général de très grosses structures, de type génie civil, qui sont trop lourdes pour être directement ancrées dans le sol. En équipant le radier de la structure avec les détecteurs selon l'invention, on se place au plus près du sol, ce qui est préférable. Mais dans certains cas de structures existantes le radier n'est plus accessible, ou trop difficilement accessible. Dans un tel cas il est possible d'équiper la structure au-dessus du radier, le plus près possible du radier, à la manière des piliers de bâtiment ou sites périphériques de citerne, c'est-à-dire de préférence avec des détecteurs d'élongation verticale.

Dans une version du procédé, chaque détecteur d'élongation comprend une fibre optique s'étendant selon la direction de l'élongation à détecter, et des moyens sensibles à l'affaiblissement d'une puissance lumineuse reçue à une extrémité de la fibre optique par rapport à la puissance d'une source lumineuse alimentant l'autre extrémité de la fibre optique. Ce type de détecteur d'élongation est particulièrement avantageux par son faible coût, sa réaction immédiate aux variations de longueur qui permet même de détecter les phénomènes vibratoires, par exemple de type sismique, et en même temps sa fidélité à long terme qui permet de comparer de façon fiable des mesures espacées dans le temps. On obtient ainsi à la fois un historique précis des événements qui sont à l'origine d'une évolution, et des mesures précises des conséquences de cette évolution.

De préférence, la fibre optique est précontrainte en traction de façon que ledit affaiblissement soit modifié aussi en cas de raccourcissement de la fibre optique. Lorsque la charge supportée par un appui augmente, elle provoque un tassement de la structure au-dessus de cet appui. Grâce à la précontrainte en traction, la fibre installée verticalement se rétracte d'elle-même par retour élastique lorsque la zone où elle est installée se tasse. Le tassement est ainsi fidèlement signalé par le détecteur d'élongation. Une fibre précontrainte installée horizontalement signale par son raccourcissement par exemple une flexion telle que la fibre optique se trouve dans la zone où cette flexion comprime le matériau support, par exemple le matériau du radier.

Dans une version avantageuse, on enregistre les mesures et leur date pour obtenir des mesures d'élongation datées et un chronogramme des mesures d'élongation. Cette version est particulièrement intéressante avec un détecteur d'élongation fidèle comme un détecteur à mesure d'affaiblissement lumineux le long d'une fibre optique, tel que présenté plus haut.

Il est particulièrement riche d'enseignement de recouper les mesures d'élongation datées avec des informations sur des événements connus datés qui ont modifié le chargement de la structure au-dessus des appuis équipés de détecteurs d'élongation. Il arrive que des structures subissent des modifications importantes qui influent significativement sur le chargement au niveau des appuis de la structure. Par exemple une piscine est créée sur le toit du bâtiment, ou encore un étage est ajouté, un jardin suspendu est créé sur une terrasse etc.. Une étude comparative, en termes de dates et de grandeur, de telles modifications et de certaines variations d'élongation relevées selon l'invention, permet de déterminer si les variations sont cohérentes avec les modifications réalisées ou au contraire ont vraisemblablement une autre cause.

Il est également avantageux de recouper les mesures d'élongation datées avec des mesures d'élongation datées obtenues sur une autre structure, au-dessus de points d'appui de cette dernière. La simultanéité de variations constatées sur les deux structures peut permettre de diagnostiquer des variations du sol affectant un territoire plus large que celui sur lequel repose la structure.

En recoupant les mesures d'élongation datées avec des données météorologiques datées, on peut expliquer des variations d'élongation par des phénomènes météorologiques survenus à la même période, par exemple un gonflement temporaire du sol suite à de fortes pluies, une sollicitation de la structure par des vents forts qui ont influé sur la répartition des charges au niveau des appuis de la structure etc..

On peut aussi, avantageusement, recouper les mesures d'élongation datées avec des données sismiques datées. On peut ainsi expliquer des variations d'élongation par des phénomènes sismiques ayant affecté la région.

Dans tous les cas qui précèdent, l'utilisation de détecteurs d'élongation fidèles tels que peuvent l'être les détecteurs à mesure d'affaiblissement lumineux dans une fibre optique, permet à la fois d'identifier la cause de variations et de savoir si ces causes n'ont modifié que temporairement les chargements, ou au contraire ont eu des séquelles plus ou moins graves nécessitant de prendre des mesures appropriées.

Une mesure que l'on peut prendre lorsqu'on a diagnostiqué une détérioration du sol sous-jacent peut être de procéder à un rééquilibrage et/ou un renforcement du sol sous-jacent. On peut par exemple injecter des matériaux sous la structure dans la zone où le soutien de la structure s'est affaibli, ou encore y placer des éléments de renforts comme des pieux en sous-œuvre.

Lors de telles opérations ou d'opérations similaires correctives, il est avantageux de piloter les opérations de rééquilibrage ou de renforcement dans le sens d'un rétablissement des élongations aux valeurs antérieures à la dégradation. Autrement dit on peut régler le degré de renfort de façon à rétablir les valeurs antérieures, par exemple injecter du matériau de façon progressive en surveillant l'évolution des élongations puis en interrompant l'injection lorsque les valeurs antérieures ont sensiblement été rétablies.

En cas de phénomène sismique on compare les valeurs d'élongation avant et après le phénomène pour déterminer si la structure et/ou le sol sous-jacent ont été durablement affectés par le phénomène sismique. Cela est permis par des détecteurs d'élongation tels que ceux mesurant l'affaiblissement lumineux dans une fibre optique, qui non seulement rendent compte des phénomènes vibratoires, comme un sismographe, mais aussi des variations à long terme, ce que ne fait pas un sismographe.

Dans une version avantageuse du procédé, on inspecte au moins une structure voisine lorsqu'on détecte une évolution du sous-jacent de la structure équipée des détecteurs d'élongation. Ainsi une structure équipée selon l'invention peut servir de détecteur pour d'autres structures, non équipées, mais qu'on estime susceptibles d'être affectées par une déficience du terrain constatée grâce à la structure équipée.

De préférence, dans le cas où la structure est un bâtiment, on répartit les détecteurs sur le pourtour du bâtiment, de préférence aux angles du bâtiment. Pour un bâtiment de taille relativement petite, par exemple d'une longueur de 20 m, il suffit en général de prévoir un détecteur d'élongation aux quatre angles (bâtiment quadrangulaire) ou quatre détecteurs répartis sur le pourtour d'un bâtiment de forme plus complexe mais ayant une dimension comparable à celle du bâtiment quadrangulaire précité. Pour des bâtiments plus grands, on peut en général placer des détecteurs de façon répartie entre les angles, en plus des détecteurs aux angles. Par exemple, sur un bâtiment d'une longueur de 40 m on place typiquement en plus des détecteurs aux angles un détecteur au milieu de chacun des grands côtés.

D'autres particularités et avantages de l'invention apparaîtront encore de la description ci-après, relative à des exemples non-limitatifs.

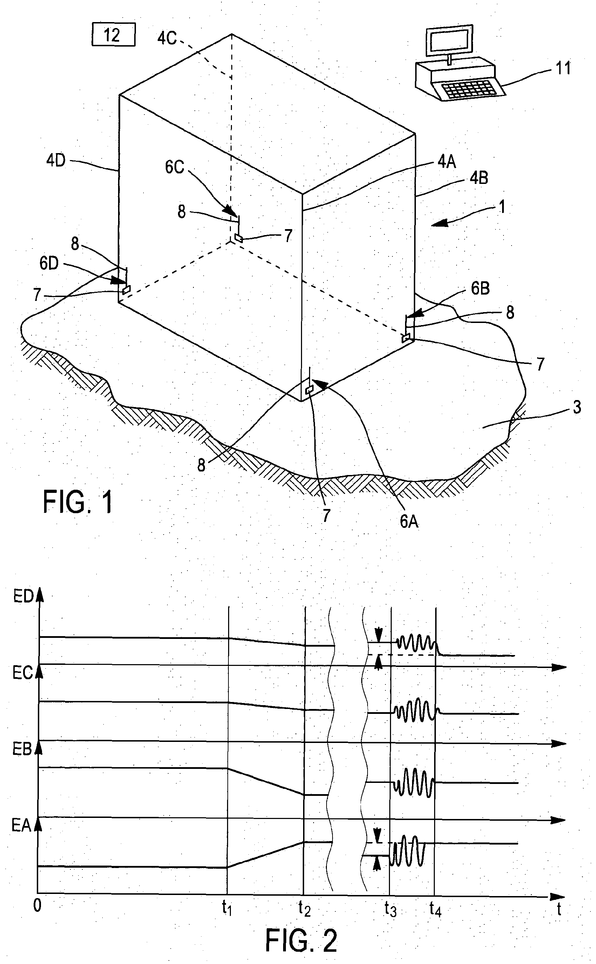

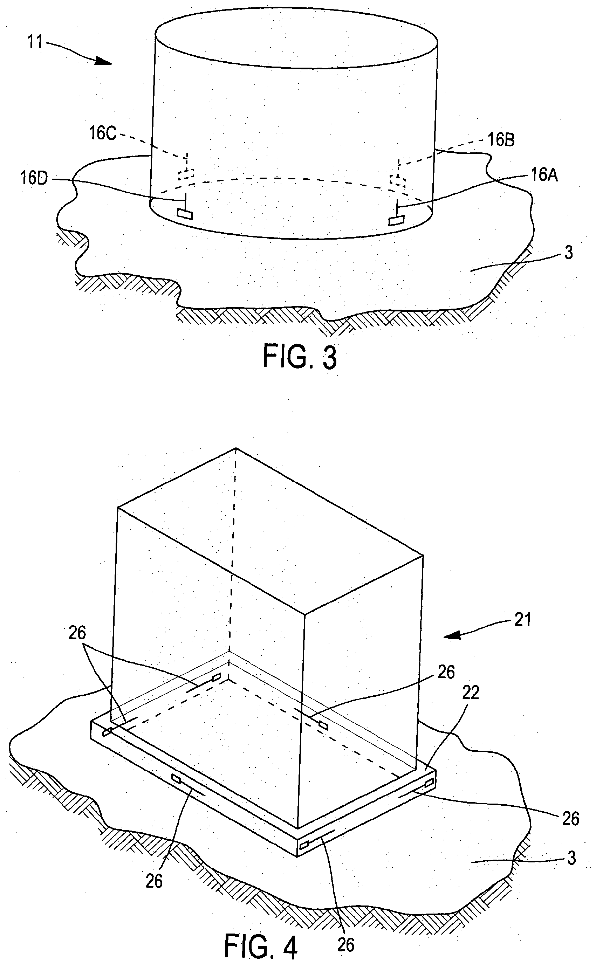

Aux dessins annexés :
▪ La figure 1 est une vue en perspective schématique d'un bâtiment équipé de détecteurs d'élongation selon l'invention, pour la mise en œuvre du procédé selon l'invention ;
▪ La figure 2 est un chronogramme des relevés d'élongation obtenus avec les quatre détecteurs du bâtiment de la figure 1, dans deux cas d'événements ayant affecté les conditions dans lesquelles le bâtiment repose sur le sol sous-jacent ;
▪ La figure 3 est une vue en perspective schématique d'une citerne cylindrique équipée de détecteurs d'élongation selon l'invention, pour la mise en œuvre du procédé selon l'invention ; et
▪ La figure 4 est une vue en perspective d'une structure comportant un radier, équipée de détecteurs d'élongation selon l'invention, pour la mise en œuvre du procédé selon l'invention.

Ces modes de réalisation n'étant nullement limitatifs, on pourra notamment considérer des variantes de l'invention ne comprenant qu'une sélection de caractéristiques décrites par la suite, isolées des autres caractéristiques décrites (même si cette sélection est isolée au sein d'une phrase comprenant ces autres caractéristiques), si cette sélection de caractéristiques est suffisante pour conférer un avantage technique ou pour différencier l'invention par rapport à l'état de la technique antérieure. Cette sélection comprend au moins une caractéristique de préférence fonctionnelle sans détails structurels, et/ou avec seulement une partie des détails structurels si cette partie uniquement est suffisante pour conférer un avantage technique ou à différencier l'invention par rapport à l'état de la technique antérieure.

Dans l'exemple représenté à la figure 1, la structure est un bâtiment rectangulaire 1 qui est implanté de façon connue dans un sol sous-jacent 3.

Dans cet exemple le bâtiment est un immeuble de forme parallélépipédique à base rectangulaire dont la longueur est par exemple de 20 m. De manière classique en soi, le bâtiment est structuré par des renforts verticaux -ou piliers- 4A, 4B, 4C, 4D en ses angles. Ces piliers sont tout particulièrement destinés à transmettre au sol au moins une partie de la charge constituée par le poids du bâtiment. Dans cet exemple classique les quatre piliers du bâtiment forment ainsi, à leur base, des appui sur le sol 3. En pratique les piliers d'angles 4A, 4B, 4C, 4D peuvent se trouver un peu en retrait à l'intérieur du bâtiment et non pas directement visibles à l'extérieur, la figure 1 étant à cet égard simplifiée pour une meilleure lisibilité.

Suivant l'invention on a placé directement au-dessus de chacun de ces appuis, le long des piliers, un détecteur d'élongation respectif 6A, 6B, 6C, 6D. Par « directement au-dessus » on veut dire à distance verticale suffisamment faible de l'appui proprement dit pour que le détecteur soit directement influencé par la totalité de la charge transmise au sol par cet appui. On a représenté schématiquement les détecteurs sur la face extérieure du bâtiment mais un montage sur une face intérieure ou latérale des piliers est également possible.

Dans l'exemple représenté, chaque détecteur est un détecteur d'élongation verticale.

De préférence, chaque détecteur comprend une fibre optique 8 qui s'étend selon la direction de détection, ici la direction verticale. La fibre est fixée à la structure (au pilier) de manière à s'allonger et se raccourcir comme la zone du pilier où elle est fixée. Le détecteur d'élongation comprend en outre une source lumineuse (non représentée) qui injecte de la lumière à une extrémité de la fibre optique et un capteur de luminosité (non représenté) sensible à la lumière transmise, c'est à dire la lumière parvenant à l'autre extrémité de la fibre optique après avoir parcouru toute la longueur de la fibre optique. De façon connue, par comparaison avec un état de référence de la fibre optique, correspondant par exemple à son état au moment de son installation, quand la fibre optique subit un étirement par rapport à son état de référence, le capteur détecte un affaiblissement accru de la puissance lumineuse transmise par rapport à la puissance lumineuse de la source. Au contraire, quand la fibre optique est comprimée longitudinalement ou bien est en tout ou partie relaxée de son étirement de référence, le capteur détecte un moindre affaiblissement de la puissance lumineuse transmise par rapport à la puissance lumineuse de la source. Ainsi le capteur de luminosité fournit un signal de mesure indicatif de la longueur et des variations de longueur du support de la fibre optique, ici la longueur verticale d'une zone inférieure du pilier où est fixée la fibre optique. Pour que la fibre soit raccourcie de façon fiable si le support, ici le pilier, se tasse, il est connu de pré-contraindre la fibre en traction lors de sa fixation au support de façon qu'en cas de tassement du support la fibre réagisse par une détente élastique diminuant son état de précontrainte en traction.

Chaque fibre optique 8 est raccordée à un boîtier 7 dans lequel se trouvent, typiquement, à la fois la source lumineuse et le capteur de luminosité. Dans ce cas la fibre est repliée en son milieu de façon que ses deux extrémités soient adjacentes, le milieu replié de la fibre se trouvant à l'extrémité du dispositif opposée au boîtier. Le boîtier 7 contient un émetteur qui transmet les résultats de la détection à un ordinateur 11 permettant de visualiser et d'enregistrer les résultats. Le mode de transmission entre les boîtiers 7 et l'ordinateur 11 peut prendre plusieurs formes, par exemple une transmission sans fil à un boîtier central 12 installé dans le bâtiment 1 ou à proximité, et capable de communiquer par internet et/ou par GPRS et/ou autre avec l'ordinateur 11.

On a représenté en figure 2 un exemple de résultats obtenus tels qu'ils peuvent par exemple être visualisés par l'ordinateur 11 de la figure 1. Quatre chronogrammes sont visibles, à savoir ceux des élongations EA, EB, EC, ED lues par les détecteurs 6A, 6B, 6C, 6D respectivement, en fonction du temps t.

Entre les instants t1 et t2, il survient un évènement qui fait fortement augmenter l'élongation EA, moins fortement diminuer les élongations EB et ED, tandis que l'élongation EC n'est pratiquement pas affectée. Ceci signifie que le pilier 4A a été fortement déchargé, que les piliers 4B et 4D ont été davantage chargés et que le pilier 4C reste sous charge sensiblement inchangée. Après l'instant t2 les états d'élongation EA, EB, EC, ED restent stables aux nouvelles valeurs.

En l'absence de modifications intervenues sur l'immeuble lui-même entre les instants t1 et t2, on peut en conclure que le sol 3 s'est tassé sous le pilier 4A qui se trouve donc dans l'impossibilité de transmettre au sol, aussi bien qu'avant, le poids du bâtiment, et que le poids du bâtiment s'est en partie reporté sur les piliers adjacents 4B et 4D, qui sont donc davantage tassés.

Selon l'invention on commence alors par vérifier si ces variations de la répartition de la charge ont endommagé le bâtiment. Au besoin on sécurise le bâtiment par des renforts provisoires, et/ou on fait évacuer le bâtiment. Ensuite, si le bâtiment est réparable, ou s'il n'est pas endommagé, on renforce le sol 3 sous le bâtiment, par exemple en y injectant des matériaux appropriés, en particulier sous le pilier 4A. De préférence en même temps qu'on procède à l'injection on surveille l'évolution des élongations 4A, 4B, 4C et 4D avec l'objectif de rétablir les valeurs antérieures à l'instant t1. Lorsque cela est atteint on interrompt l'injection. D'autres mesures correctives peuvent constituer à placer des nouveaux pieux sous le bâtiment en particulier dans la zone du pilier 4A. On peut ensuite procéder à la réparation définitive du bâtiment, par exemple réparation des fissures, installation de renforts définitifs etc.

On a représenté dans la partie droite de la figure 2 un exemple d'observations qui peuvent être faites en cas de séisme survenant entre les instants t3 et t4. Les détecteurs utilisés préférentiellement selon l'invention, fonctionnant par mesure de l'affaiblissement de la lumière transmise par une fibre optique, rendent compte à la fois des phénomènes vibratoires du séisme en temps réel, et des séquelles du séisme sous la forme des élongations EA et ED qui se stabilisent à des valeurs différentes de celles avant le séisme. Le processus d'inspection et de réparation du bâtiment est ensuite sensiblement le même que dans l'exemple précédent.

Dans l'exemple représenté à la figure 3, la structure est une citerne 11 à axe vertical, de grandes dimensions, du type utilisé dans les installations pétrolières. Il n'y a pas de d'éléments structurels où se concentre la charge. On a réparti les détecteurs d'élongation verticale 16 en divers points, ici quatre points, répartis sur le pourtour de la base de la paroi latérale de la citerne.

Dans l'exemple représenté à la figure 4, la structure 21, représentée sous la forme schématique d'un parallélépipède comme la structure 1 à la figure 1, comporte cette fois un radier 22 formant semelle d'appui sur le sol 3. Dans ce cas on a placé des détecteurs d'élongation horizontale 26 en des points répartis sur le pourtour du radier 22. Dans l'exemple représenté les détecteurs 26 sont placés sur les faces latérales du radier mais une installation sur sa face supérieure, notamment tout autour de la structure 21 proprement dite, est également envisageable.

## Revendications

1. Procédé de détection précoce des risques de défaillance d'une structure naturelle ou humaine (1), en particulier du fait de conditions géologiques régnant en-dessous de la structure, **caractérisé en ce que** l'on place sur la structure un détecteur d'élongation (6A, 6B, 6C, 6D) directement au-dessus de chacun de plusieurs points d'appui de la structure (1), et l'on diagnostique une évolution du sol (3) sous-jacent à la structure au moins dans certains cas où les élongations détectées (EA, EB, EC, ED) indiquent une évolution de la répartition des charges verticales entre lesdits plusieurs points appui.

2. Procédé selon la revendication 1, **caractérisé en ce que** les détecteurs sont des détecteurs d'élongation verticale.

3. Procédé selon la revendication 2, **caractérisé en ce que** la structure étant un bâtiment ou analogue, on place les détecteurs d'élongation verticale à la base de piliers porteurs, en particulier de piliers d'angle de la structure.

4. Procédé selon la revendication 2 ou 3, **caractérisé en ce qu'**on diagnostique une tendance à un tassement en dessous d'un appui où l'élongation mesurée a augmenté.

5. Procédé selon l'une des revendications 2 à 4, **caractérisé en ce qu'**on diagnostique une tendance au gonflement en dessous d'un appui où l'élongation mesurée a diminué.

6. Procédé selon la revendication 1, **caractérisé en ce que** la structure comportant un radier, les détecteurs sont des détecteurs d'élongation horizontale que l'on place sur le radier.

7. Procédé selon l'une des revendications 1 à 6, **caractérisé en ce que** chaque détecteur d'élongation comprend une fibre optique (8), et des moyens sensibles à l'affaiblissement d'une puissance lumineuse reçue à une extrémité de la fibre optique par rapport à la puissance d'une source lumineuse alimentant l'autre extrémité de la fibre optique.

8. Procédé selon la revendication 1 à 7, **caractérisé en ce que** la fibre optique (8) est précontrainte en traction de façon que ledit affaiblissement soit modifié aussi en cas de raccourcissement de la fibre optique.

9. Procédé selon l'une des revendications 1 à 8, **caractérisé en ce qu'**on enregistre les mesures et leur date pour obtenir des mesures d'élongation datées et un chronogramme des mesures d'élongation.

10. Procédé selon l'une des revendications 1 à 9, **caractérisé en ce qu'**on recoupe les mesures d'élongation datées avec des informations sur des événements connus datés qui ont modifié le chargement de la structure au-dessus des appuis équipés de détecteurs d'élongation.

11. Procédé selon l'une des revendications 1 à 10, **caractérisé en ce qu'**on recoupe les mesures d'élongation datées avec des mesures d'élongation verticale datées obtenues sur une autre structure, au-dessus d'appuis de cette dernière.

12. Procédé selon l'une des revendications 1 à 11, **caractérisé en ce qu'**on recoupe les mesures d'élongation datées avec des données météorologiques datées.

13. Procédé selon l'une des revendications 1 à 12, **caractérisé en ce qu'**on recoupe les mesures d'élongation datées avec des données sismiques datées.

14. Procédé selon l'une des revendications 1 à 13, **caractérisé en ce qu'**on procède à un rééquilibrage et/ou un renforcement du substrat (2) et/ou du sol (3) sous-jacent à la structure lorsque l'on diagnostique une évolution du sol sous-jacent.

15. Procédé selon la revendication 14, **caractérisé en ce qu'**on pilote les opérations de rééquilibrage ou de renforcement dans le sens d'un rétablissement des élongations aux valeurs antérieures à la dégradation.

16. Procédé selon l'une des revendications 1 à 15, **caractérisé en ce qu'**en cas de phénomène sismique on compare les valeurs d'élongation avant et après le phénomène pour déterminer si la structure (1) et/ou le sol sous-jacent (3) ont été durablement affectés par le phénomène sismique.

17. Procédé selon l'une des revendications 1 à 16, **caractérisé en ce qu'**on inspecte au moins une structure voisine lorsqu'on détecte une évolution du sol sous-jacent à la structure équipée des détecteurs d'élongation.

## Patentansprüche

1. Früherkennungsverfahren der Versagensrisiken einer natürlichen oder menschlichen Struktur (1), insbesondere aufgrund von unter der Struktur herrschenden geologischen Bedingungen, **dadurch gekennzeichnet, dass** auf der Struktur direkt oberhalb mehrerer Stützpunkte der Struktur je ein Dehnungssensor (6A, 6B, 6C, 6D) angeordnet wird, und eine Veränderung des der Struktur zugrunde liegenden Bodens (3) in zumindest einigen Fällen diagnostiziert wird, in denen die detektierten Dehnungen (EA, EB, EC, ED) eine Veränderung der Aufteilung der vertikalen Lasten zwischen den mehreren Stützpunkten anzeigen.

2. Verfahren nach Anspruch 1, **dadurch gekennzeichnet, dass** die Sensoren vertikale Dehnungssensoren sind.

3. Verfahren nach Anspruch 2, **dadurch gekennzeichnet, dass** bei einer Struktur wie einem Gebäude oder einer anderen gleichartigen Struktur die vertikalen Dehnungssensoren am Sockel von tragenden Pfosten, insbesondere Eckpfosten der Struktur, angeordnet werden.

4. Verfahren nach Anspruch 2 oder 3, **dadurch gekennzeichnet, dass** eine Tendenz zum Absacken unterhalb einer Stütze diagnostiziert wird, wo die gemessene Dehnung zugenommen hat.

5. Verfahren nach einem der Ansprüche 2 bis 4, **dadurch gekennzeichnet, dass** eine Tendenz zum Aufquellen unterhalb einer Stütze diagnostiziert wird, wo die gemessene Dehnung abgenommen hat.

6. Verfahren nach Anspruch 1, **dadurch gekennzeichnet, dass** die Struktur ein Fundament aufweist, wobei die Sensoren horizontale Dehnungssensoren sind, die auf dem Fundament angeordnet werden.

7. Verfahren nach einem der Ansprüche 1 bis 6, **dadurch gekennzeichnet, dass** jeder Dehnungssensor eine optische Faser (8) sowie Mittel aufweist, die die Abschwächung einer an einem Ende der optischen Faser empfangenen Leuchtkraft im Vergleich zu der Leuchtkraft einer Lichtquelle, die das andere Ende der optischen Faser versorgt, erfassen können.

8. Verfahren nach den Ansprüchen 1 bis 7, **dadurch gekennzeichnet, dass** die optische Faser (8) derart auf Zug vorgespannt ist, dass die Abschwächung auch bei Verkürzung der optischen Faser verändert wird.

9. Verfahren nach einem der Ansprüche 1 bis 8, **dadurch gekennzeichnet, dass** die Messungen und deren Datumsangabe aufgezeichnet werden, um datierte Dehnungsmessungen und ein Chronogramm der Dehnungsmessungen zu erhalten.

10. Verfahren nach einem der Ansprüche 1 bis 9, **dadurch gekennzeichnet, dass** die datierten Dehnungsmessungen mit den Informationen über bekannte, datierte Ereignisse, die die Belastung der Struktur oberhalb der mit Dehnungssensoren versehenen Stützen verändert haben, kombiniert werden.

11. Verfahren nach einem der Ansprüche 1 bis 10, **dadurch gekennzeichnet, dass** die datierten Dehnungsmessungen mit datierten vertikalen Dehnungsmessungen kombiniert werden, die auf einer anderen Struktur oberhalb deren Stützen erhalten wurden.

12. Verfahren nach einem der Ansprüche 1 bis 11, **dadurch gekennzeichnet, dass** die datierten Dehnungsmessungen mit datierten meteorologischen Daten kombiniert werden.

13. Verfahren nach einem der Ansprüche 1 bis 12, **dadurch gekennzeichnet, dass** die datierten Dehnungsmessungen mit datierten seismischen Daten kombiniert werden.

14. Verfahren nach einem der Ansprüche 1 bis 13, **dadurch gekennzeichnet, dass** eine Neujustierung und/oder eine Verstärkung des Substrates (2) und/oder des der Struktur zugrunde liegenden Bodens (3) vorgenommen wird, wenn eine Veränderung des zugrunde liegenden Bodens diagnostiziert wird.

15. Verfahren nach Anspruch 14, **dadurch gekennzeichnet, dass** die Vorgänge der Neujustierung oder der Verstärkung in Richtung einer Wiederherstellung der vor der Verschlechterung herrschenden Dehnungswerte gesteuert werden.

16. Verfahren nach einem der Ansprüche 1 bis 15, **dadurch gekennzeichnet, dass** im Fall eines seismischen Phänomens die Dehnungswerte vor und nach dem Phänomen verglichen werden, um zu bestimmen, ob die Struktur (1) und/oder der zugrunde liegende Boden dauerhaft durch das seismische Phänomen beeinträchtigt wurden.

17. Verfahren nach einem der Ansprüche 1 bis 16, **dadurch gekennzeichnet, dass** zumindest eine benachbarte Struktur untersucht wird, wenn eine Veränderung des der mit Dehnungssensoren versehenen Struktur zugrunde liegenden Bodens diagnostiziert wird.

## Claims

1. A method for the early detection of the risks of failure of a natural or man-made structure (1), in particular as a result of geological conditions prevailing beneath the structure, **characterized by** the steps of placing an elongation detector (6A, 6B, 6C, 6D) on the structure directly above each of several bearing points of the structure (1) ;and a change in the soil (3) underlying the structure is diagnosed, at least in certain cases where the detected elongations (EA, EB, EC, ED) indicate a change in the distribution of the vertical loads between said several bearing points.

2. The method according to claim 1, **characterized in that** the detectors are vertical elongation detectors.

3. The method according to claim 2, **characterized in that** when the structure is a building or similar, the vertical elongation detectors are placed at the base of load-bearing pillars, in particular corner pillars of the structure.

4. The method according to claim 2 or 3, **characterized in** by diagnosing a tendency to compaction below a support where the measured elongation has increased.

5. The method according to one of claims 2 - 4, **characterized in that** by diagnosing a tendency to swelling below a support where the measured elongation has decreased.

6. The method according to claim 1, **characterized in that** in case said structure comprises a raft foundation, the detectors are horizontal elongation detectors that are placed on the raft foundation.

7. The method according to one of claims 1 - 6, **characterized in that** each elongation detector comprises an optical fibre (8) and means sensitive to the weakening of a light intensity received at one end of the optical fibre with respect to the intensity of a light source supplying the other end of the optical fibre.

8. The method according to one of claims 1 - 7, **characterized in that** the optical fibre is pre-tensioned so that said weakening is also modified in the case of shortening of the fibre.

9. The method according to one of claims 1 - 8, **characterized in that** the measurements and their date are recorded in order to obtain dated elongation measurements and a timing chart of the elongation measurements.

10. The method according to one of claims 1 - 9, **characterized in that** the dated elongation measurements are cross-checked with information on dated known events that have modified the loading of the structure above the supports equipped with elongation detectors.

11. The method according to one of claims 1 - 10, **characterized in that** the dated elongation measurements are cross-checked with information on dated vertical elongation measurements obtained on another structure, above supports of the latter.

12. The method according to one of claims 1 - 11, **characterized in that** the dated elongation measurements are cross-checked with dated meteorological data.

13. The method according to one of claims 1 - 12, **characterized in that** the dated elongation measurements are cross-checked with dated seismic data.

14. The method according to one of claims 1 - 13, **characterized in that** rebalancing and/or reinforcement of the substrate (2) or of the soil (3) underlying the structure is carried out when a change in the underlying soil is diagnosed.

15. The method according to claim 14, **characterized in that** the rebalancing or reinforcement operations are controlled towards restoring elongations to the values prior to the deterioration.

16. The method according to one of claims 1 - 15, **characterized in that** in the case of a seismic phenomenon, the elongation values before and after the phenomenon are compared in order to determine whether the structure (1) and/or the underlying soil (3) have been permanently affected by the seismic phenomenon.

17. The method according to one of claims 1 - 16, **characterized in that** at least one neighbouring structure is inspected when a change is detected in the soil underlying the structure equipped with the elongation detectors.
